# EUROPEAN PATENT APPLICATION

(11) **EP 3 173 168 A1**
(43) Date of publication of application: **31.05.2017**
(21) Application number: 15824313.9
(22) Date of filing: 04.06.2015
(51) Int. Cl.: B23B 21/00, B23B 29/24

(54) **MACHINE TOOL, TOOL UNIT, AND MACHINING METHOD**

(30) Priority: 24.07.2014 JP 2014150536
(71) Applicant: Murata Machinery, Ltd., Kyoto-shi, Kyoto 601-8326 (JP)
(72) Inventor: ISHIHARA, Tadashi, Inuyama-shi Aichi 484-8502 (JP)
(74) Representative: Zimmermann, Tankred Klaus
(86) International application number: PCT/JP2015/066157
(87) International publication number: WO 2016/013307

(57) **Abstract**

[Problem] Provided is a machine tool that is able to reduce the time and effort to replace a tool unit and allows a tool unit to be easily replaced with another type of tool, such as a rotary tool, and a tool unit that can be easily replaced.

[Solving Means] A tool unit 24 includes a base 40 that is mountable on and demountable from a first turret 23, a slider 50 that is disposed on the base, holds a cutting tool T1 in a state in which a direction of the linear cutting blade Th of the cutting tool T1 is inclined with respect to a Z-direction by a predetermined angle when seen from an X-direction, and is able to move in a Y-direction perpendicular to both the X-direction and Z-direction, and a drive transmission part 60 that is disposed on the base 40 and is connected to a tool drive unit 30 to move the slider 50.

## Description

### TECHNICAL FIELD

The present invention relates to a machine tool, a tool unit, and a machining method.

### BACKGROUND ART

A lathe, which is one of machine tools, holds a workpiece to be machined, on the rotating shaft (spindle) and performs cutting or the like on the workpiece using a cutting tool while rotating the workpiece. Examples of a machining method using a lathe include a method of cutting a workpiece while feeding a cutting tool in a tangential direction of the workpiece (a direction crossing the rotation shaft). This machining method requires a drive system for moving the cutting tool in the tangential direction of the workpiece. For example, there is known the configuration of a tool unit in which a drive transmission part for moving a cutting tool in a tangential direction of a workpiece is formed in a tool post (for example, see Patent Literature 1).

### [Citation List]

### [Patent Literature]

[Patent Literature 1] Japanese Patent No. 2013-244582

### SUMMARY OF INVENTION

### TECHNICAL PROBLEM

However, the tool unit disclosed in Patent Literature 1 has a problem that the drive transmission part is disposed in the tool post and therefore demounting it from the tool post is troublesome and the replacement of a tool takes time. Also, this tool unit has another problem that in mounting, for example, a rotary tool such as a drill on the tool post, a path for transmitting the rotational driving force is ensured by demounting the tool unit and mounting the rotary tool in the position of the tool unit and therefore only one of both can be mounted on the tool post.

In view of the foregoing, an object of the present invention is to provide a machine tool that is able to reduce the time and effort to replace a tool unit, as well as allows the tool unit to be easily replaced with another type of tool, such as a rotary tool, a tool unit that can be easily replaced, and a machining method.

### SOLUTION TO PROBLEM

A machine tool of the present invention includes a main spindle that rotates while holding a workpiece, a tool post on which a tool unit holding a cutting tool for cutting the workpiece is mounted and which incorporates a tool drive unit, and a moving device that relatively moves the main spindle and the tool post in an X-direction determining the amount of cutting of the workpiece by the cutting tool and a Z-direction along an axis of the main spindle. The tool unit includes a base that is mountable on and demountable from the tool post, a slider that is disposed on the base, holds the cutting tool in a state in which a direction of a linear cutting blade of the cutting tool is inclined with respect to the Z-direction by a predetermined angle when seen from the X-direction, and is able to move in a Y-direction perpendicular to both the X-direction and the Z-direction, and a drive transmission part that is disposed in the base and is connected to the tool drive unit to move the slider.

The tool post may be a tool post that is able to rotate about a rotation axis parallel with the Z-direction and on whose periphery multiple tool units or multiple cutting tools can be mounted. The tool unit may include a connection mechanism that connects the tool drive unit and the drive transmission part when the tool post is rotated and thus the tool unit faces the workpiece. The base may include a spigot that is inserted in an opening of the tool post to position the tool unit. The drive transmission part may be connected to the tool drive unit using the spigot. A rotation motor for rotationally driving a rotary tool held by the tool post may be used as the tool drive unit. The drive transmission part may include a pinion gear that is rotated by drive of the rotation motor and a rack gear that is disposed on the slider along the Y-direction and is engaged with the pinion gear.

A tool unit of the present invention is a tool unit that is mounted on a tool post incorporating a tool drive unit and is able to hold a cutting tool for cutting a workpiece held by a main spindle. The tool unit includes a base that is mountable on and demountable from the tool post, a slider that is disposed on the base, holds the cutting tool in a state in which a direction of a linear cutting blade of the cutting tool is inclined with respect to a Z-direction by a predetermined angle when seen from an X-direction, the Z-direction being a direction along an axis of the main spindle, the X-direction being a direction determining the amount of cutting of the workpiece by the cutting tool, and is able to move in a Y-direction perpendicular to both the X-direction and the Z-direction, and a drive transmission part that is disposed in the base, is connectable to the tool drive unit, and moves the slider on the basis of drive of the tool drive unit.

A machining method of the present invention is a method for machining a workpiece which rotates while being held by a main spindle. The method includes holding a cutting tool over a tool post with a slider therebetween, relatively moving the main spindle and the tool post in an X-direction determining the amount of cutting of the workpiece by the cutting tool and a Z-direction along an axis of the main spindle, causing the slider to hold the cutting tool in a state in which a direction of a linear cutting blade of the cutting tool is inclined with respect to the Z-direction by a predetermined angle when seen from the X-direction, and moving the slider in a Y-direction perpendicular to both the X-direction and the Z-direction.

### ADVANTAGEOUS EFFECTS OF INVENTION

According to the present invention, the base of the tool unit is disposed so as to be mountable on and demountable from the tool post, and the drive transmission part is disposed in the base. Thus, when replacing the tool unit, the base and drive transmission part can be demounted from and remounted on the tool post together. As a result, it is possible to reduce the time and effort to replace the tool unit, as well as to easily replace the tool unit with another type of tool such as a rotary tool.

If the tool post is a tool post that is able to rotate about a rotation axis parallel with the Z-direction and on whose periphery multiple tool units or multiple cutting tools can be mounted and if the tool unit includes the connection mechanism that connects the tool drive unit and the drive transmission part when the tool post is rotated and thus the tool unit faces the workpiece, the tool drive unit is connected to the drive transmission part of the tool unit that machines the workpiece. Thus, the power of the tool drive unit can be used without waste. If the base includes the spigot that is inserted in an opening of the tool post to position the tool unit, the tool unit can be positioned by inserting the spigot into the opening. Thus, the tool unit can be mounted easily. If the drive transmission part is connected to the tool drive unit using the spigot, the transmission drive unit can be accurately connected to the tool drive unit. If a rotation motor for rotationally driving a rotary tool held by the tool post is used as the tool drive unit, there is no need to separately provide a drive source for moving the slider. Thus, an increase in cost can be prevented. If the drive transmission part includes a pinion gear that is rotated by drive of the rotation motor and a rack gear that is disposed on the slider along the Y-direction and is engaged with the pinion gear, the driving force of the rotating motor can be efficiently transmitted when moving in the Y-direction.

Since the tool unit of the present invention includes the drive transmission part, which is disposed in the base, is connectable to the tool drive unit, and moves the slider on the basis of the drive of the tool drive unit, the base and drive transmission part can be demounted from and remounted on the tool post together. Thus, the tool unit can be easily replaced.

According to the machining method of the present invention, the workpiece can be efficiently cut by moving the slider holding the cutting tool and relatively moving the tool post and main spindle. Also, since the cutting tool is held by the slider, the cutting tool can be easily replaced by replacing the slider.

### BRIEF DESCRIPTION OF THE DRAWINGS

FIG. 1 includes diagrams showing an example of a major part of a machine tool of a first embodiment.
FIG. 2 is a perspective view showing an example of a first turret.
FIG. 3 is a perspective sectional view showing an example of a tool unit.
FIG. 4 is a diagram showing an example of the first turret.
FIG. 5 includes diagrams showing an example of the first turret.
FIG. 6 includes diagrams showing an example of the operation of the machine tool.
FIG. 7 includes diagrams showing an example of the operation of the machine tool.
FIG. 8 is a diagram showing an example of a first turret according to a modification.

### DETAILED DESCRIPTION

Now, an embodiment of the present invention will be described with reference to the drawings. However, the present invention is not limited thereto. To clarify the embodiment, the drawings are scaled, for example, partially enlarged or highlighted, as necessary. In the drawings, directions are shown by an XYZ coordinate system. In this XYZ coordinate system, a plane parallel with the horizontal plane is defined as a YZ plane; the direction of the rotation axis of a main spindle 7 (a counter spindle 8) in the YZ plane is defined as a Z-direction; the direction perpendicular to the Z-direction in the YZ plane is defined as a Y direction; the direction perpendicular to the YZ plane is defined as an X direction; and the X axis is a direction that is perpendicular to the Z-direction and determines the amount of cutting of a workpiece. In the drawings, the directions of arrows represent the positive X-, Y-, and Z-directions, and the directions opposite to the directions of the arrows represent the negative X-, Y-, and Z-directions. In the embodiment below, a method for machining a workpiece which rotates while being held by a main spindle is performed. The method includes holding a cutting tool over a tool post with a slider therebetween, relatively moving the main spindle and the tool post in an X-direction determining the amount of cutting of the workpiece by the cutting tool and a Z-direction along an axis of the main spindle, causing the slider to hold the cutting tool in a state in which a direction of a linear cutting blade of the cutting tool is inclined with respect to the Z-direction by a predetermined angle when seen from the X-direction, and moving the slider in a Y-direction perpendicular to both the X-direction and the Z-direction.

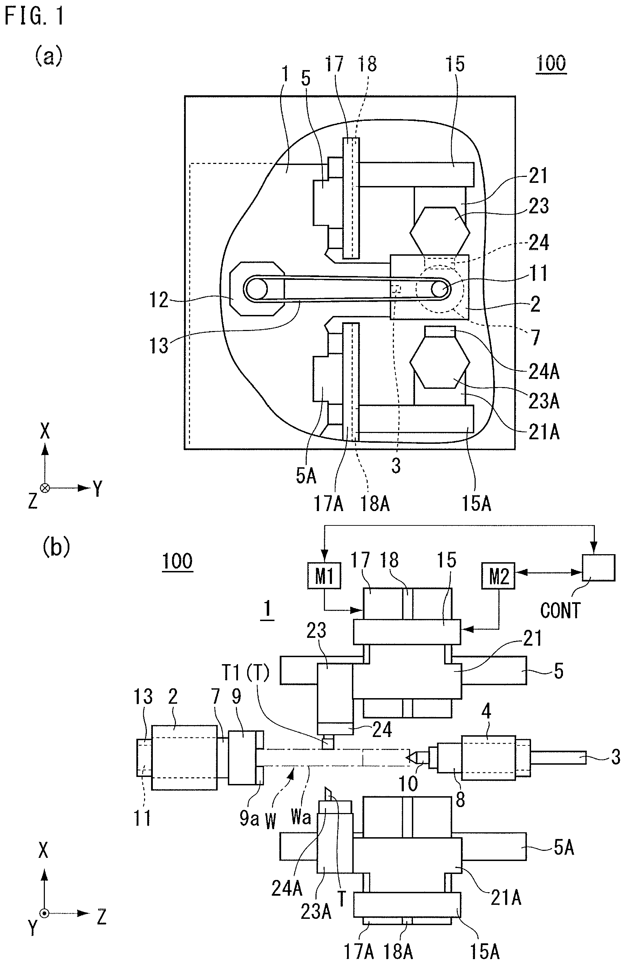

A machine tool 100 of the present embodiment will be described with reference to the drawings. FIG. 1 includes diagrams showing an example of a major part of the machine tool 100 of the present embodiment, in which FIG. 1 (a) is a side view; and FIG. 1(b) is a front view. The machine tool 100 shown in FIG. 1 is a lathe. In FIG. 1, the front of the machine tool 100 is located on the positive Y-side, and the back thereof is located on the negative Y-side. The sides of the machine tool 100 are located on the positive and negative Z-sides, and the Z-direction represents the transverse direction of the machine tool 100.

As shown in FIG. 1, the machine tool 100 includes a base 1. The base 1 is provided with a headstock 2 and a tailstock 4. The headstock 2 rotatably supports a main spindle 7 through a bearing or the like (not shown). While the headstock 2 is fixed to the base 1, it may be formed so as to be movable in the Z, X, Y, or other directions by driving a motor or the like. The main spindle 7 has a chuck drive unit 9 on the positive Z-side end thereof. The chuck drive unit 9 causes multiple grasping claws 9a to move in the radial direction of the main spindle 7 and to hold a workpiece W. While, in FIG. 1, the workpiece W is grasped by three grasping claws 9a equally spaced around the rotation axis of the main spindle 7, other configurations may be used. The number or shape of the grasping claws 9a may be any number or shape as long as they are able to hold the workpiece W. The workpiece W grasped by the grasping claws 9a is in a shape having a cylindrical surface Wa (e.g., a cylindrical shape).

The negative Z-side end of the main spindle 7 protrudes from the headstock 2 in the negative Z-direction and has a pulley 11 mounted thereon. A belt 13 runs between the pulley 11 and the rotary shaft of a motor 12 disposed in the base 1. Thus, the main spindle 7 is rotated by the drive of the motor 12 through the belt 13. The number of revolutions or the like of the motor 12 is controlled in accordance with an instruction from a controller (not shown). The motor 12 is, for example, a motor including a torque control mechanism. The main spindle 7 need not be driven by both the motor 12 and belt 13; the drive of the motor 12 may be transmitted to the main spindle 7 through a gear train or the like, or the motor 12 may directly rotate the main spindle 7.

The tailstock 4 is formed so as to be movable along a Z-direction guide 3 disposed on the base 1. The tailstock 4 rotatably supports the counter spindle 8 through a bearing or the like (not shown). The directions of the rotation axes of the main spindle 7 and counter spindle 8 are both the Z-direction. The tailstock 4 has a center 10 mounted on the negative Z-side end thereof. The counter spindle 8 may be fixed to the tailstock 4 and used as a dead center.

If the workpiece W has a long length (i.e., it is long in the Z-direction), as shown by a dot-and-dash line in FIG. 1(b), the positive Z-side end of the workpiece W is held by the center 10 of the tailstock 4. Thus, the long workpiece W is rotated while being sandwiched between the main shaft 7 and counter spindle 8. As a result, the workpiece W can be rotated stably during cutting. If the workpiece W has a short length (i.e., it is short in the Z-direction), it is rotated while being held by only the grasping claws 9a of the main spindle 7. In this case, the tailstock 4 need not be used.

As shown in FIGS. 1(a) and 1(b), the base 1 is provided with a Z-direction guide 5 disposed in the Z-direction. The base 1 is also provided with a Z-direction guide 5A disposed in the Z-direction in a negative X position of the Z-direction guide 5. The Z-direction guides 5 and 5A are provided with Z-axis slides 17 and 17A, respectively, that are able to move along the Z-direction guides 5 and 5A in the Z-direction. As shown in FIG. 1(b), the Z-axis slide 17 is moved in the Z-direction by the drive of a Z-direction drive system (a moving device) M1 and held in position. The Z-direction drive system M1 is, for example, an electric motor or hydraulic system. The Z-axis slide 17A includes a drive system similar to the Z-direction drive system M1 and is moved in the Z-direction by the drive of this drive system and held in position. The configuration of the Z-axis slide 17A may be the same as or different from that of the Z-direction drive system M1.

The Z-axis slides 17 and 17A have X-direction guides 18 and 18A, respectively, thereon. The Z-axis slides 17 and 17A are also provided with X-axis slides 15 and 15A, respectively, that are able to move along the X-direction guides 18 and 18A. The X-axis slide 15 is moved in the X direction by the drive of an X-direction drive system (a moving device) M2 and held in position. The X-direction drive system M2 is, for example, an electric motor or hydraulic system. The X-axis slide 15A includes a drive system similar to the X-direction drive system M2 and is moved in the X direction by the drive of this drive system and held in position. The configuration of the drive system of the X-axis slide 15A may be the same as or different from that of the X-direction drive system M2.

The X-axis slides 15 and 15A are provided with tool post drive units 21 and 21A, respectively. The tool post drive units 21 and 21A each house a rotational drive unit (not shown), such as a motor. The tool post drive unit 21 has a first turret 23 mounted thereon. The first turret 23 is able to rotate about a rotation axis parallel with the Z-direction by the drive of the rotational drive unit. Similarly, the tool post drive unit 21A has a second turret 23A mounted thereon. The second turret 23A is able to rotate about a rotation axis parallel with the Z-direction by the drive of the rotational drive unit. The first turret 23 is located over the workpiece W (on the positive X-side thereof); the second turret 23A is located under the workpiece W (on the negative X-side thereof). That is, the workpiece W is sandwiched between the first and second turrets 23 and 23A.

The first and second turrets 23 and 23A have, on the peripheral surfaces thereof, multiple holding parts for holding cutting tools T. The cutting tools T are held by all or some of the holding parts. Accordingly, the desired cutting tool T is selected by rotating the first turret 23 or second turret 23A. The cutting tools T held by the holding parts of the first and second turrets 23 and 23A can be replaced on a holder basis. Examples of the cutting tools T include cutting tools for cutting the workpiece W, as well as rotary tools, such as a drill and an end mill.

The first turret 23 has a tool unit 24 mounted thereon as one of the holders, and the second turret 23A has a tool unit 24A mounted thereon as one of the holders. The configurations of the tool units 24 and 24A may be the same or different. Note that the second turret 23A need not be provided with the tool unit 24A.

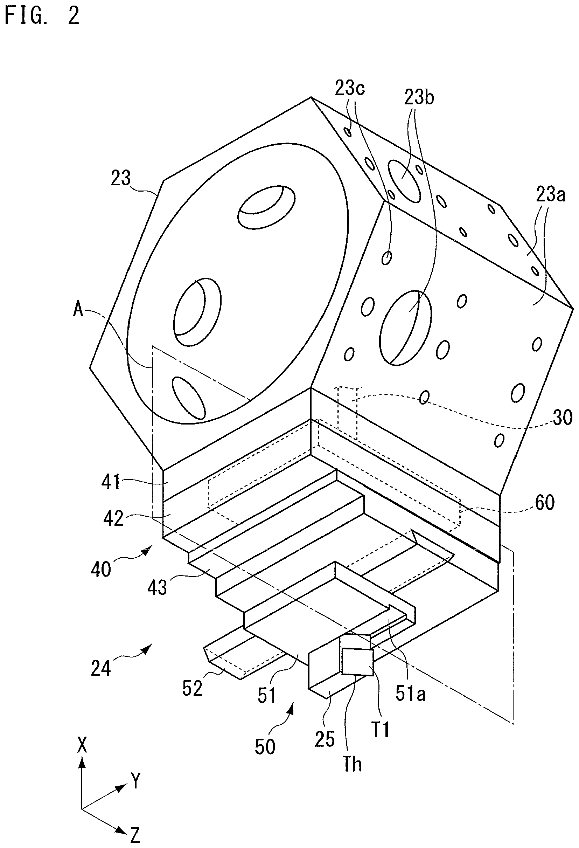

A cutting tool T1 is mounted over the tool unit 24 with a holder 25 (see FIG. 2) therebetween. On the other hand, a cutting tool T is mounted over the tool unit 24A with a holder (not shown) therebetween. The cutting tool T may be the same as or different from the cutting tool T1 mounted over the tool unit 24.

While, in the machine tool 100 shown in FIG. 1, the cutting tools T and T1 are located on the positive and negative X-sides of the workpiece W in such a manner that the workpiece W is sandwiched therebetween, one of these cutting tools may be located. Also, while the cutting tools T and T1 are located in the X direction (the vertical direction) with respect to the workpiece W, the cutting tool T may be located in the X-direction with respect to the workpiece W instead. Also, when cutting the workpiece W, the cutting tools T and T1 may be used in any manner under the control of a controller (not shown). For example, one of the cutting tools may be used, or both may be used alternately or simultaneously.

While, in FIG. 1, the first and second turrets 23 and 23A are used as tool posts, other types of tool posts may be used. For example, comb-shaped tool posts may be used. If comb-shaped tool posts are used, cutting tools T are held by the teeth of each comb-shaped tool post, and one of the cutting tools T is selected by moving the comb-shaped tool post in the direction in which the teeth are arranged.

FIG. 2 is an enlarged perspective view showing a major part including the first turret 23.

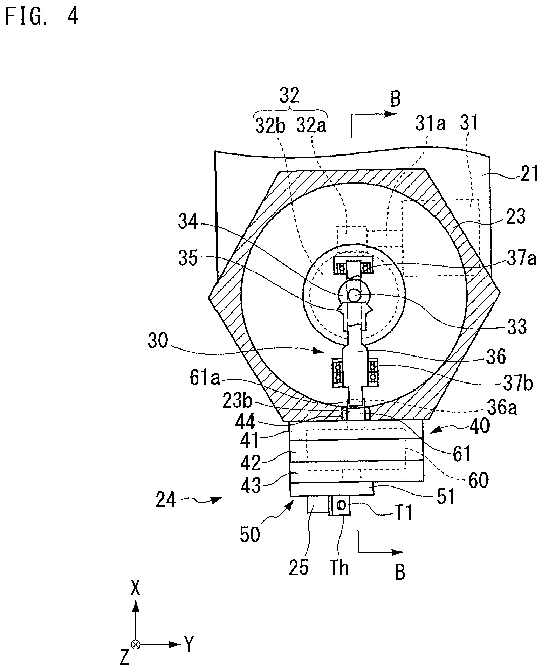

As shown in FIG. 2, the first turret 23 is in the shape of a tube and has, on the periphery thereof, multiple mounting surfaces 23a on which holding parts such as the tool unit 24 can be mounted. The mounting surfaces 23a are arranged about a Z-axis. While FIG. 2 shows an example in which six mounting surfaces 23a are formed, other configurations may be used. The first turret 23 may have seven or more or five or less mounting surfaces 23a. Each mounting surface 23a has an opening 23b and bolt holes 23c. The opening 23b is formed so as to radially penetrate through the first turret 23. The first turret 23 is also provided with a tool drive unit 30 (see FIG. 4 and the like; to be discussed later) for driving a rotary tool such as a drill or end mill.

The tool unit 24 is mounted on one (e.g., the negative X-side mounting surface 23a) of the mounting surfaces 23a of the first turret 23. The tool unit 24 is disposed so as to be demountable from the first turret 23. Note that tool units 24 may be mounted on multiple mounting surfaces 23a.

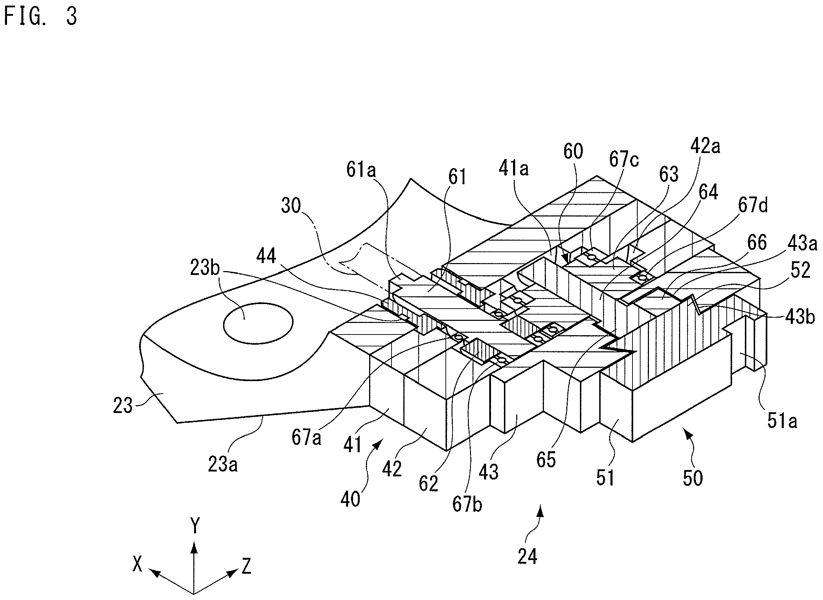

FIG. 3 is a perspective sectional view taken along plane A in FIG. 2 and shows sections of the tool unit 24 and the negative X-side mounting surface 23a of the first turret 23. Note that the holder 25 or cutting tool T1 is not shown in FIG. 3.

As shown in FIG. 3, the tool unit 24 includes a base 40, a slider 50, and a drive transmission part 60.

The base 40 is disposed so as to be demountable from the first turret 23 and holds the slider 50 and drive transmission part 60. The base 40 includes a first member 41, a second member 42, and a third member 43. The first member 41, second member 42 and third member 43 are in the form of rectangular blocks and are disposed so as to be stacked in the X-direction. The base 40 is fixed to the first turret 23 by a fixing member such as a bolt (not shown).

The first member 41 is disposed so as to face the first turret 23 and is provided with a spigot 44. The spigot 44 is disposed so as to protrude from the first member 41 in the positive X-direction and is inserted in the opening 23b of the first turret 23. The spigot 44 is formed with a size such that it is inserted in the opening 23b with almost no gap. Thus, when the spigot 44 is inserted into the opening 23b, the tool unit 24 is positioned with respect to the first turret 23. The first member 41 includes a housing part 41a. The housing part 41a is formed so as to penetrate through the first member 41 in the X-direction. The housing part 41a houses part of the spigot 44 and part of the tool drive unit 30 (to be discussed later).

The second member 42 is disposed on the negative X-side of the first member 41 and includes a housing part 42a. The housing part 42a is formed so as to penetrate through the second member 42 in the X-direction and is connected to the housing part 41a. The housing part 42a houses part of the tool drive unit 30 (to be discussed later).

The third member 43 is disposed on the negative X-side of the second member 42 and includes a housing part 43a and a guide insertion part 43b. The housing part 43a houses part of the tool drive unit 30 (to be discussed later). The guide insertion part 43b has part of the slider 50 (to be discussed later) (a guide 52) inserted therein. The guide insertion part 43b is formed in line so as to penetrate through the third member 43 in the Y-direction. A section of the guide insertion part 43b taken along the plane A is trapezoidal and has a long side on the positive X-side and a short side on the negative X-side.

The slider 50 is mounted on the third member 43 of the base 40. The slider 50 is disposed so as to be movable in the Y-direction with respect to the base 40. The slider 50 includes a base 51 and a guide 52. The base 51 is disposed on the negative X-side surface of the third member 43. The base 51 has, on the negative X-side thereof, a mounting part 51a for mounting the holder 25. The holder 25 holds the cutting tool T1. Accordingly, when the tool unit 24 is disposed on the negative X-side of the first turret 23, the cutting tool T1 is set in such a manner that the linear cutting blade Th is along the YZ plane.

The guide 52 is formed integrally with the base 51. The guide 52 is formed in line along the Y-direction. While Fig. 2 shows an example in which the guide 52 is formed so as to partially extend off the base 40 in the Y-direction, the guide 52 may be configured not to extend off the base 40. The guide 52 is inserted in the guide insertion part 43b. The guide 52 is in the shape of a trapezoid so that a section thereof taken along the plane A corresponds to the guide insertion part 43b, thereby preventing the slider 50 from coming off in the negative X-direction.

The drive transmission part 60 is connected to the tool drive unit 30 of the first turret 23. The drive transmission part 60 transmits the driving force of the tool drive unit 30 to the slider 50 so as to move the slider 50. The drive transmission part 60 includes a first shaft 61, a first gear 62, a second gear 63, a second shaft 64, a pinion gear 65, and a rack gear 66.

The first shaft 61 is housed in the first member 41 and second member 42 of the base 40. The first shaft 61 is supported by the first member 41 and second member 42 through, for example, bearings 67a and 67b and is disposed so as to be rotatable about a rotation axis parallel with the X-direction.

The first shaft 61 is disposed so as to protrude from the first member 41 in the positive X-direction. The positive X-side end of the first shaft 61 is disposed in the spigot 44 and further inserted in the opening 23b together with the spigot 44. A needle bearing (not shown), for example, is disposed between the positive X-side end of the first shaft 61 and the spigot 44. Thus, the first shaft 61 is rotatably supported by the spigot 44. As seen above, the drive transmission part 60 is connected to the tool drive unit 30 using the spigot 44. The first shaft 61 has a protrusion 61a on the positive X-side end surface thereof. The protrusion 61a is formed so as to protrude into the first turret 23. The protrusion 61a is formed in line on the end surface. The first shaft 61 is disposed in such a manner that the protrusion 61a is kept directed in the Y-direction by a guide or the like (not shown). As will be described later, the first shaft 61 is connected to the tool drive unit 30 through the protrusion 61a.

The first gear 62 is fixed to the negative X-side end of the first shaft 61 and is rotated about a rotation axis parallel with the X-direction together with the first shaft 61. The first gear 62 is housed in the housing part 42a of the second member 42.

The second gear 63 is disposed so as to engage with the first gear 62 and is rotated about a rotation axis parallel with the X-direction in conjunction with the rotation of the first gear 62. The second gear 63 is disposed so as to extend over the housing part 41a of the first member 41 and the housing part 42a of the second member 42. The second gear 63 is supported by the first member 41 and second member 42 through, for example, bearings 67c and 67d.

The second shaft 64 is disposed so as to penetrate through the second gear 63 in the X-direction and is rotated about a rotation axis parallel with the X-direction together with the second gear 63. The second shaft 64 is disposed so as to extend over the housing part 41a of the first member 41, the housing part 42a of the second member 42, and the housing part 43a of the third member 43. The negative X-side end of the second shaft 64 is disposed in the housing part 43a.

The pinion gear 65 is formed on the negative X-side end of the second shaft 64 and is disposed in the housing part 43a. The pinion gear 65 is rotated about a rotation axis parallel with the X-direction together with the second shaft 64. The pinion gear 65 has, on the periphery thereof, multiple teeth arranged in a predetermined pitch in the rotation direction.

The rack gear 66 is disposed in line along the Y-direction. The rack gear 66 is fixed to the positive X-side surface of the guide 52. The rack gear 66 has, on the positive Z-side surface thereof, multiple teeth arranged in a predetermined pitch in the Y-direction. The rack gear 66 is disposed in such a manner that the teeth thereof are engaged with the teeth of the pinion gear 65.

As described above, the pinion gear 65 is supported by the first member 41 and second member 42 through the second gear 63 and bearings 67c and 67d. The rack gear 66 is disposed so as to be movable in the Y-direction by the guide 52. Accordingly, when the pinion gear 65 is rotated, the rack gear 66 moves in the Y-direction with respect to the pinion gear 65 and thus the slider 50 moves in the Y-direction.

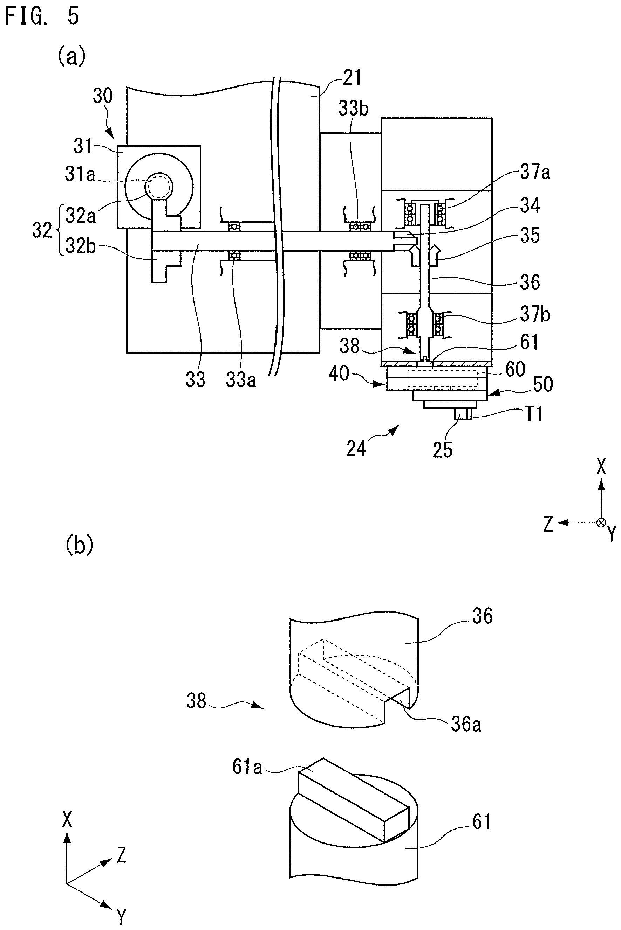

FIG. 4 is a diagram of the inside of the first turret 23 seen in the positive Z-direction. FIG. 5 (a) is a sectional view taken along line B-B in FIG. 4. As shown in FIGS. 4 and5(a), the tool drive unit 30 is disposed in a range from the tool post drive unit 21 to the inside of the first turret 23. The tool drive unit 30 includes a motor 31, a worm gear 32, a transmission shaft 33, and bevel gears 34 and 35.

The motor 31 is disposed on the positive Z-side of the first turret 23 and is mounted on, for example, the tool post drive unit 21. The motor 31 includes an output shaft 31a parallel with the Y direction. The output shaft 31a rotates about a rotation axis parallel with the Y direction. The worm gear 32 includes a screw gear 32a mounted on the output shaft 31a and a helical gear 32b mounted on the transmission shaft 33. The worm gear 32 transmits the rotation of the output shaft 31a to the transmission shaft 33. The transmission shaft 33 is supported by, for example, bearings 33a and 33b so as to be rotatable about a rotation axis parallel with the Z-direction. The transmission shaft 33 has the helical gear 32b mounted on the positive Z-side end thereof. The transmission shaft 33 has the bevel gear 34 mounted on the negative Z-side end thereof. The bevel gear 34 is engaged with the bevel gear 35. The bevel gear 35 is mounted on a transmission shaft 36. The bevel gears 34 and 35 transmit the rotation of the transmission shaft 33 to the transmission shaft 36.

The transmission shaft 36 rotates about a rotation axis parallel with the X-direction. The transmission shaft 36 is rotatably supported by, for example, bearings 37a and 37b. The negative X-side end surface of the transmission shaft 36 is directed to the negative X-side and has a recess 36a. The recess 36a is formed in line along the Y-direction.

FIG. 5(b) is an enlarged perspective view showing the recess 36a of the transmission shaft 36. FIG. 5(b) also shows the protrusion 61a of the first shaft 61. Note that to show the configurations of the elements, FIG. 5(b) shows a state in which the recess 36a and protrusion 61a are separated from each other in the X-direction. As shown in FIG. 5(b), the recess 36a is formed with a size such that the protrusion 61a can be inserted thereinto.

In the present embodiment, the transmission shaft 36 and first shaft 61 are disposed in such a manner that the protrusion 61a is inserted into the recess 36a when the tool unit 24 is disposed on the negative X-side of the first turret 23. When the protrusion 61a is inserted into the recess 36a, the transmission shaft 36 and first shaft 61 are engaged with each other with respect to a direction about a rotation axis parallel with the X-direction. Thus, the rotation of the transmission shaft 36 in the direction about the rotation axis parallel with the X-direction can be transmitted to the first shaft 61. As seen above, when the tool unit 24 is disposed on the negative X-side of the first turret 23, which faces the workpiece W, the protrusion 61a and recess 36a constitute a connection mechanism 38 that connects the tool drive unit 30 and drive transmission part 60.

Next, the operation of the machine tool 100 thus configured will be described. First, the workpiece W to be machined is held by the main spindle 7. After being grasped, the workpiece W is rotated by driving the motor 12 to rotate the main spindle 7. Note that when the workpiece W is held by both the main spindle 7 and counter spindle 8, these spindles are rotated synchronously. The number of revolutions of the workpiece W is set in accordance with the machining process as appropriate.

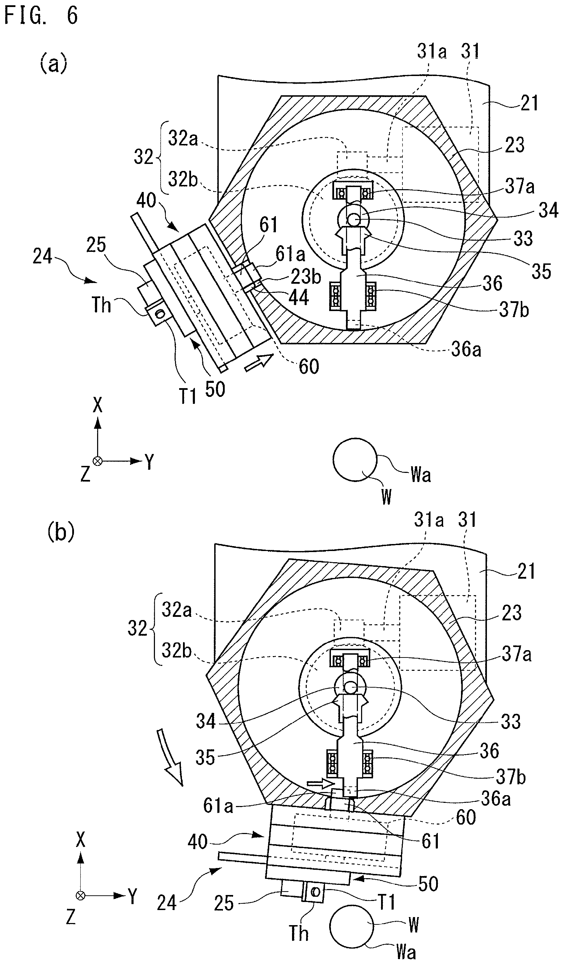

Then, the first turret 23 is rotated, and the cutting tool T1 is selected. Before selecting the cutting tool T1, the tool unit 24 is mounted on one of the mounting surfaces 23a of the first turret 23. In this case, as shown in FIG. 6(a), the spigot 44 disposed on the base 40 of the tool unit 24 is inserted into the opening 23b of the first turret 23. Thus, the base 40 is mounted on the first turret 23, and the tool unit 24 is positioned with respect to the first turret 23. Since the drive transmission part 60 is disposed in the base 40 as described above, the drive transmission part 60 is mounted on the first turret 23 together with the base 40. As seen above, the tool unit 24 can be mounted with a little time and effort. After mounting the base 40, the tool unit 24 is fixed to the first turret 23 using a fixing member (not shown). Then, the cutting tool T1 is mounted on the holder 25, which is then mounted on the mounting part 51a of the tool unit 24. Thus, the linear cutting blade Th is disposed in a direction parallel with the YZ plane and so as to be inclined with respect to the Z-direction when seen from the X-direction.

Then, when the first turret 23 is rotated about a rotation axis parallel with the Z-direction and thus the tool unit 24 approaches the negative X-side position of the first turret 23, the protrusion 61a of the first shaft 61 moves in the Y-direction in conjunction with the rotation of the first turret 23, for example, as shown in FIG. 6(b). In the present embodiment, as described above, the recess 36a and protrusion 61a are each formed in line and disposed in the Y-direction. Thus, the first turret 23 is rotated without being interfered with by the recess 36a or protrusion 61a, and the protrusion 61a is inserted into the recess 36a. As seen above, when the first turret 23 is rotated and the tool unit 24 is located in the position facing the workpiece W (the negative X-side position of the first turret 23), the transmission shaft 36 is allowed to transmit the rotation thereof to the first shaft 61.

Then, the position of the cutting tool T1 in the X-direction is adjusted. In this adjustment, the tool post drive unit 21 is moved in the X-direction by the X-direction drive system M2 so that the linear cutting blade Th of the cutting tool T1 corresponds to the cylindrical surface Wa of the workpiece W. The position of the linear cutting blade Th in the X-direction determines the amount of cutting of the cylindrical surface Wa of the workpiece W. The amount of cutting may be set to a predetermined value by the controller CONT, or may be set by the operator manually.

When the rotation of the workpiece W is stabilized, the cylindrical surface Wa of the workpiece W is cut using the cutting tool T1. In the cutting process, the Z coordinate position to which the linear cutting blade Th of the cutting tool T1 is moved is set, for example, by the movement of the Z-axis slide 17 in the Z-direction. These movements are made by the drive of the Z-direction drive system M1 under the control of the controller CONT.

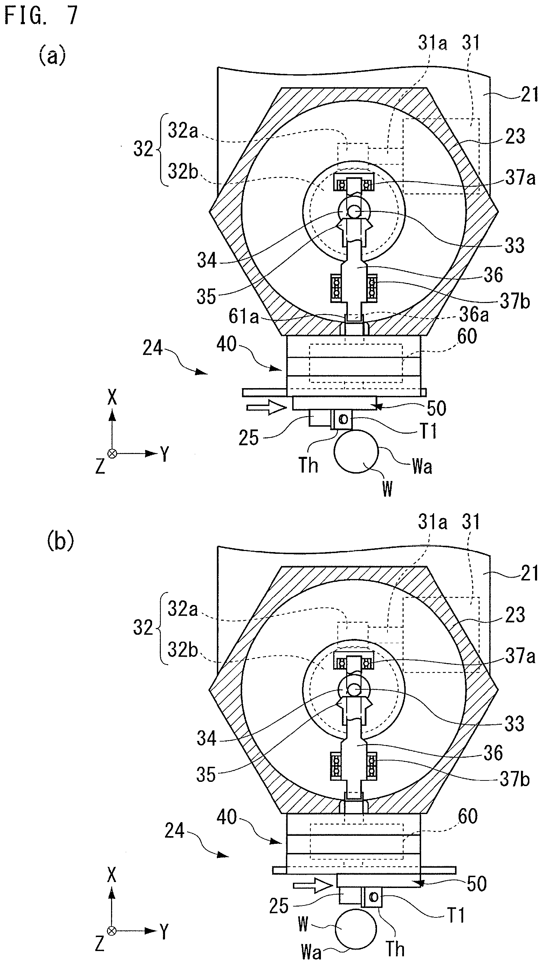

As shown in FIG. 7(a), the Y coordinate position to which the linear cutting blade Th of the cutting tool T1 is moved is set by the movement of the slider 50 in the Y-direction. The controller CONT makes this setting by controlling the rotation of the motor 31 of the tool drive unit 30. The rotation of the motor 31 is transmitted to the transmission shaft 36 through the worm gear 32, transmission shaft 33, and bevel gears 34 and 35, and the transmission shaft 36 is rotated about a rotation axis parallel with the X-direction. The rotation of the transmission shaft 36 is transmitted to the first shaft 61 (the drive transmission part 60) through the recess 36a and protrusion 61a, and the first shaft 61 is rotated about a rotation axis parallel with the X-direction. The rotation of the first shaft 61 is transmitted to the rack gear 66 through the first gear 62, second gear 63, second shaft 64, and pinion gear 65, and the rack gear 66 moves in the Y-direction together with the slider 50.

Then, in an example of the present embodiment, the workpiece W is machined by moving the linear cutting blade Th of the cutting tool T1 in the Y-direction, which is a tangential direction of the cylindrical surface Wa of the workpiece W. The cutting tool T1 is moved in the Y direction, for example, on the basis of machining information (machining recipe) preset in a storage unit or the like of the controller (not shown). Note that the cutting tool T1 may be moved by the operator manually.

The linear cutting blade Th of the cutting tool T1 is moved from the negative Y-side to positive Y-side along a tangent plane of the cylindrical surface Wa of the workpiece W. As shown in FIG. 7(a), when the positive Z-side end of the linear cutting blade Th contacts the cylindrical surface Wa, cutting is started. As shown in FIG. 7(b), when the negative Z-side end of the linear cutting blade Th leaves the workpiece W, the cutting is complete. During the cutting, the movement of the slider 50 in the Y-direction is controlled by the controller CONT.

While the example in which the workpiece W is cut using the tool unit 24 of the first turret 23 has been described above, the tool unit 24A (see FIG. 1) of the second turret 23A may be additionally used to cut the workpiece W. In this case, the second turret 23A and tool unit 24A may have configurations similar to the first turret 23 and tool unit 24, and the cutting tool T may be moved in the Y-direction by moving a slider disposed on the tool unit 24A in the Y-direction. When cutting the cylindrical surface Wa using both the cutting tools T1 and T, the cutting tools may cut the same orbital portion of the cylindrical surface Wa in different amounts, or may cut different portions of the cylindrical surface Wa. When the cutting of the workpiece W is complete, the workpiece W is released from the grasping claws 9a and taken out. When demounting the tool unit 24 from the first turret 23, the drive transmission part 60 can be demounted together with the base 40 by pulling the spigot 44 out of the opening 23b. Thus, the tool unit 24 can be replaced easily.

As described above, according to the present embodiment, the base 40 of the tool unit 24 is disposed so as to be mountable on and demountable from the first turret 23, and the drive transmission part 60 is disposed in the base 40. Thus, when replacing the tool unit 24, the base 40 and drive transmission part 60 can be demounted from and remounted on the first turret 23 together. Thus, it is possible to reduce the time and effort to replace the tool unit 24, as well as to easily replace the tool unit 24 with another type of tool such as a rotary tool. Further, since the slider 50 is moved in the Y-direction by the tool drive unit 30 of the first turret 23, the cutting tool T1 can be moved in the Y-direction by a small drive mechanism.

While the embodiment has been described above, the present invention is not limited thereto. Various changes can be made to the embodiment without departing from the spirit and scope of the invention.

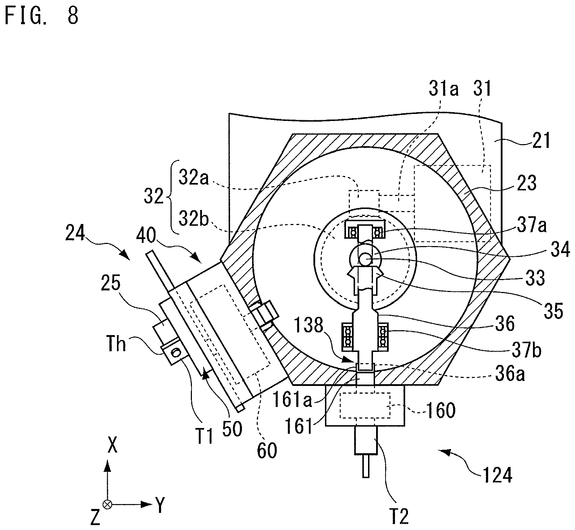

FIG. 8 is a diagram showing an example of a first turret 23 according to a modification. As shown in FIG. 8, in addition to a tool unit 24, a tool unit 124 for holding a cutting tool T2, such as a drill, may be mounted on another mounting surface 23a of the first turret 23.

In this case, the tool unit 124 is provided with a drive transmission part 160 that is able to transmit the driving force of a tool drive unit 30 to the cutting tool T2. The drive transmission part 160 includes a shaft 161 having a protrusion 161a similar to the protrusion 61a of the above embodiment. The protrusion 161a and a recess 36a of a transmission shaft 36 constitute a connection mechanism 138. Thus, when the first turret 23 is rotated and thus the tool unit 124 is located in a position facing a workpiece W (a negative X-side position of the first turret 23), the tool drive unit 30 and drive transmission part 160 are connected together. As seen above, the tool drive unit 30 is connected to the cutting tool T2 by simply rotating the first turret 23. Thus, the time and effort to demount the tool unit 24 and to newly mount the tool unit 124 are saved. As seen above, there may be used a configuration in which both the tool unit 24 and tool unit 124 are mounted on the first turret 23 and the workpiece W is machined using these tool units.

While, in the above embodiment, the Y-direction is a direction along the horizontal plane, the Y-direction may be a direction perpendicular to the horizontal plane. In this case, when cutting the workpiece W, the slider 50 of the tool unit 24 moves in the direction perpendicular to the horizontal plane (e.g., the gravity direction).

In addition to the elements of the above embodiment, a digital gauge for detecting the position of the slider 50 may be disposed on part of the tool drive unit 30 or drive transmission part 60.

In the above embodiment, the cutting tool T1 is moved with respect to the workpiece W (the main spindle 7, etc.) for cutting; instead, the workpiece W may be moved with respect to the cutting tool T1, or both the cutting tool T1 and workpiece W may be moved for cutting.

While, in the above embodiment, the cutting tool T1 is moved in the Y-direction as an example, other configurations may be used. For example, cutting may be performed using a combined direction of the Y-direction and Z-direction as the moving direction of the cutting tool T1. Even in this case, moving the cutting tool T1 in the Y-direction only requires moving the slider 50 in the Y-direction.

### Description of Reference Signs

W...workpiece M1...Z-direction drive system (moving device) M2...X-direction drive system (moving device) T, T1...cutting tool Th...linear cutting blade 7...main spindle 21, 21A...tool post drive unit 23...first turret (tool post) 23A...second turret (tool post) 23a...mounting surface 23b...opening 24, 24A...tool unit 25...holder 30...tool drive unit 31...motor (rotating motor) 36...transmission shaft 36a...recess 38...connection mechanism 40...base 44...spigot 50...slider 60...drive transmission part 65...pinion gear 66...rack gear 100...machine tool

## Claims

1. A machine tool comprising:
a main spindle that rotates while holding a workpiece;
a tool post on which a tool unit holding a cutting tool for cutting the workpiece is mounted and which incorporates a tool drive unit; and
a moving device that relatively moves the main spindle and the tool post in an X-direction determining the amount of cutting of the workpiece by the cutting tool and a Z-direction along an axis of the main spindle, wherein
the tool unit comprises:
a base that is mountable on and demountable from the tool post;
a slider that is disposed on the base, holds the cutting tool in a state in which a direction of a linear cutting blade of the cutting tool is inclined with respect to the Z-direction by a predetermined angle when seen from the X-direction, and is able to move in a Y-direction perpendicular to both the X-direction and the Z-direction; and
a drive transmission part that is disposed in the base, is connected to the tool drive unit, and moves the slider.

2. The machine tool of Claim 1, wherein
the tool post is a tool post that is able to rotate about a rotation axis parallel with the Z-direction and on whose periphery a plurality of tool units or a plurality of cutting tools can be mounted, and
the tool unit comprises a connection mechanism that connects the tool drive unit and the drive transmission part when the tool post is rotated and thus the tool unit faces the workpiece.

3. The machine tool of Claim 1 or 2, wherein the base comprises a spigot that is inserted in an opening of the tool post to position the tool unit.

4. The machine tool of Claim 3, wherein the drive transmission part is connected to the tool drive unit using the spigot.

5. The machine tool of any one of Claims 1 to 4, wherein a rotation motor for rotationally driving a rotary tool held by the tool post is used as the tool drive unit.

6. The machine tool of Claim 5, wherein the drive transmission part comprises a pinion gear that is rotated by drive of the rotation motor and a rack gear that is disposed on the slider along the Y-direction and is engaged with the pinion gear.

7. A tool unit that is mounted on a tool post incorporating a tool drive unit and is able to hold a cutting tool for cutting a workpiece held by a main spindle, the tool unit comprising:
a base that is mountable on and demountable from the tool post;
a slider that is disposed on the base, holds the cutting tool in a state in which a direction of a linear cutting blade of the cutting tool is inclined with respect to a Z-direction by a predetermined angle when seen from an X-direction, the Z-direction being a direction that determines the amount of cutting of the workpiece by the cutting tool, the X-direction being a direction along an axis of the main spindle, and is able to move in a Y-direction perpendicular to both the X-direction and the Z-direction; and
a drive transmission part that is disposed in the base, is connectable to the tool drive unit, and moves the slider on the basis of drive of the tool drive unit.

8. A method for machining a workpiece which rotates while being held by a main spindle, comprising:
holding a cutting tool over a tool post with a slider therebetween;
relatively moving the main spindle and the tool post in an X-direction determining the amount of cutting of the workpiece by the cutting tool and a Z-direction along an axis of the main spindle;
causing the slider to hold the cutting tool in a state in which a direction of a linear cutting blade of the cutting tool is inclined with respect to the Z-direction by a predetermined angle when seen from the X-direction; and
moving the slider in a Y-direction perpendicular to both the X-direction and the Z-direction.
